Europäisches Patentamt

European Patent Office

Office européen des brevets

(11) Publication number: **0 425 045 A1**

# EUROPEAN PATENT APPLICATION

(21) Application number: **90202821.6**

(22) Date of filing: **20.10.90**

(51) Int. Cl.⁵: **H01M 6/52, H01M 10/54**

(30) Priority: **26.10.89 IT 2214689**

(43) Date of publication of application:
**02.05.91 Bulletin 91/18**

(84) Designated Contracting States:
**AT BE CH DE DK ES FR GB GR LI LU NL SE**

(71) Applicant: **NUOVA SAMIM S.p.A.**
**Via Caldera 21**
**I-20153 Milan(IT)**

(72) Inventor: **Cangini, Giuseppe**
**Via Ogaden 15**
**I-00199 Rome(IT)**
Inventor: **Figari, Luigi**
**Via Bartolomeo d'Alviano 18**
**I-20146 Milan(IT)**
Inventor: **Moglie, Luciano**
**Via Federico Paolini 55**
**I-00122 Rome(IT)**
Inventor: **Pescetelli, Alessandro**
**P.zza Zamagna 42**
**I-00143 Rome(IT)**

(74) Representative: **Roggero, Sergio et al**
**Ing. Barzanò & Zanardo Milano S.p.A. Via**
**Borgonuovo 10**
**I-20121 Milano(IT)**

(54) **Process for treating spent batteries.**

(57) A process is described for treating spent batteries of any type, comprising essentially the following stages:
 a) disintegrating the spent batteries followed by stirring in water, then screening to obtain a pulverulent aqueous turbid fraction (underscreen fraction) and a coarse fraction (overscreen fraction);
 b) stirring the pulverulent aqueous turbid fraction at a pH exceeding 7, followed by filtering by which the solids are separated from the aqueous solution, which is fed to water treatment;
 c) removing mercury both from the coarse fraction of point a) and from the separated solids of point b) in a mercury removal furnace to obtain residues essentially free of mercury.

EP 0 425 045 A1

# PROCESS FOR TREATING SPENT BATTERIES

This invention relates to a process for treating spent batteries. The reason for which spent batteries are treated is basically ecological, namely the separation, removal and recovery not only of mercury, the component considered most harmful, but also of other harmful components such as Zn, Fe, Mn, Cd, Pb, Ni, $Cl^-$, $NR_4+$, KOH, Cr etc. A further reason is to recover certain battery components (manganese, iron, zinc, cadmium, nickel etc.). Conventional pyrometallurgical treatment processes consist essentially of the following stages:
- disintegrating the batteries
- heat treating them in a furnace to an average of 600-800° C
- condensing and separating the evolved mercury from the gas in the furnace
- variously treating the furnace residue for coarse separation of the main components (Fe, Mn, Zn).

Other processes of hydrometallurgical type are also known in which after the batteries have been disintegrated the ground material is dissolved in one or more suitable solvents (nitric, hydrochloric, sulphuric, acetic or other acid) to obtain a preliminary separation of the various battery components, followed by known treatment (electrolysis, cementation, precipitation etc.) to effect more thorough separation and obtain a commercial product. In general it can be said that the greatest drawbacks of said processes are their operating cost and their danger in the sense that during heat treatment in the furnace gaseous combinations of mercury, chlorides, organic substances, ammonia, heavy metals (cadmium, lead, zinc etc.) form and require considerable and careful control.

Even in processes which use solvents toxic compounds such as hydrogen, acid mists etc. can form by reaction with strong acids. These are also very complicated processes in that although dissolving with a particular acid can solve the problem of one particular component, it leaves an intimate mixture of the other components (for example in a common solution) such that their subsequent separation becomes very complicated.

Another type of known process is that described in the patent DE 247023.

This process comprises essentially:
- a very complicated initial stage of grinding, screening and magnetically separating the components to give four streams, namely:
- a first stream containing magnetic scrap (Fe)
- a second stream consisting mainly of alkaline batteries which have not undergone disintegration
- a third non-magnetic stream (paper, plastic, unopened batteries)
- a fourth stream consisting of the pulverulent product of the underscreen fraction(fine black mass);
- the fourth stream to which the black mass and non-magnetic part from the first and second streams have been added is washed with water to remove alkaline and ammonium salts and is then added to the third stream and treated in a mercury removal furnace, from which a gaseous stream emerges containing mercury and organic compounds, this then being subjected to after-burning and mercury condensation, there being left in the furnace a residue which is fed to a WAELZ furnace for Zn, Cd and Pb separation, this furnace also leaving a residue which is treated with sulphuric acid to obtain a manganese dioxide residue and a manganese sulphate solution;
- mercury is removed from the first stream in a furnace, the residue from which is re-ground and re-separated mechanically to obtain a final iron product and a fine residue which is added to the main fines cycle (fourth stream);
- the second stream is ground in suitable grinders and heat-treated to provide a magnetic part which is added to the first stream, and a non-magnetic pulverulent part which is added to the fourth stream.

In particular, it can be noted from the scheme described in DE 247023 that the third stream is fed directly to the mercury removal furnace without prior washing, and that the first stream and second stream, before being washed, are heated above 300° C ( 700° C and 318° C max respectively).

This results in the same problems as those encountered in the aforesaid prior processes although to a slightly lesser extent, in that harmful gaseous combinations of mercury, chlorides, organic substances, heavy metals, ammonia etc. are formed both during the heat treatment and in particular in the mercury removal furnace. We have now discovered a process which obviates the drawbacks of processes of the prior art and provides the following substantial advantages:
- considerable environmental hygiene as the process operates with water at ambient temperature and the mercury removal furnace operates at a lower average temperature in the practical absence of chlorides, ammonia, potash etc, so preventing the formation of any harmful and/or unforseen compound;
- a practically total mercury removal from the residues down to a final 1-2 g/t of Hg;

2

- low operating cost and high working safety.

The process of the present invention for treating spent batteries of any type comprises essentially the following stages:

a) disintegrating the spent batteries followed by stirring in water for a time preferably of between 5 and 15 minutes, then screening to obtain a pulverulent aqueous turbid fraction (underscreen fraction) and a coarse fraction (overscreen fraction);

b) stirring the pulverulent aqueous turbid fraction at a pH exceeding 7, followed by filtering by which the solids are separated from the aqueous solution, which is fed to water treatment;

c) removing mercury both from the coarse fraction of point a) and from the separated solids of point b) in a mercury removal furnace to obtain residues essentially free of mercury.

The residues from the mercury removal furnace can be used as raw material for the manganese and ferrous alloy industries or can be fed to metallurgical plants of the WAELZ or Imperial Smelting type for recovering zinc, lead and cadmium, and for slagging or manganese and iron recovery, or can have their magnetic fraction removed followed by attacking the iron-removed residue with hydrometallurgical separation (electrolysis, cementation etc.) for main Zn-Mn separation.

A further alternative is to subject said residues to screening, from which a fine fraction (mainly $MnO_x$) is obtained together with a coarse fraction from which iron and zinc scrap are individually separated.

The mercury removal furnace operates at a temperature preferably less than 700° C and more preferably between 500 and 630° C.

The stirring of the pulverulent turbid fraction is preferably done at a pH of between 8 and 10 for a time of between 10 and 30 minutes.

The ammonia content of the aqueous solution obtained from the filtration of the pulverulent aqueous turbid fraction can be reduced before it is fed to water treatment.

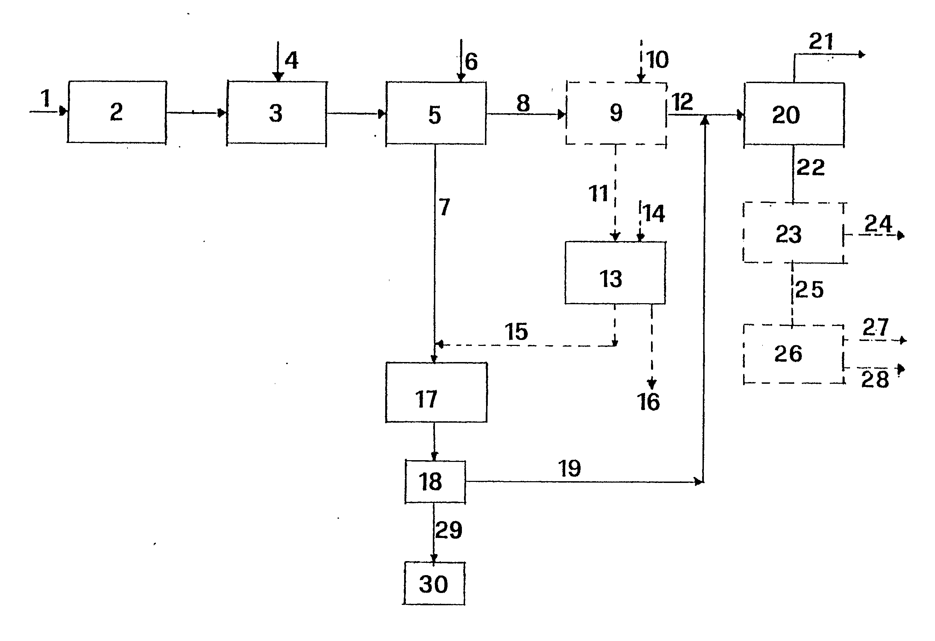

With regard to the coarse fraction (over-screen fraction) of point a) this can be sorted (before mercury removal) to, separate plastics from the other metal or non-metal components. The plastics are then washed to recover any pulverulent residues, which are added together with the wash water to the pulverulent aqueous turbid fraction of point a), and the metal and non-metal components are fed to the mercury removal furnace of point c). The invention will be more apparent from the flow diagram of Figure 1 which shows a non-limiting embodiment thereof. (Those stages which are not obligatory, ie are either preferred or optional, are shown by dashed lines on the flow diagram). The feedstock 1 consisting of dry batteries of any kind (alkaline, acid, nickel-cadmium, mercury etc.) is firstly disintegrated in a knife mill 2, then washed in a wash drum 3 with water 4 (to dissolve all the chlorides, precipitate all the soluble salts of zinc, manganese and other heavy metals, and further facilitate the important separation and cleaning of the ground pieces with easier subsequent separation of the plastics from the metal parts attached to them), then screened in a 2-4 mm mesh vibrating rotary screen 5 kept under a water spray 6, by means of which two streams are obtained, these being a pulverulent aqueous turbid fraction 7 and a coarse fraction 8 comprising pieces of average size 0.8 x 1 cm.

The coarse fraction 8 can if desired undergo separation in a hydro-gravimetric machine 9, to which water·10 is also fed, in order to separate the plastic parts 11 from the heavy metal and non-metal components 12 by floating.

The plastic parts 11 are then washed at 13 with a slightly acid aqueous solution containing 1-2 ppm of an industrial surfactant. and are then rinsed on a screen with water 14 to wash away any pulverulent residues 15 which may still be attached, these then being added to the turbid fraction 7 together with the wash water. The stream 16 represents the washed plastic pieces, which can be dumped.

The turbid fraction 7 is stirred in a vat 17 at pH 9-9.5 with the addition of a few ppm (of NaHS), followed by filtration 18 to separate the solids (containing mercury) 19 which are added to the stream 12. The filter panel is washed with water.

The combined streams 12 and 19 are fed to a mercury removal furnace 20 from which the mercury leaves in the form of gas 21 (to be condensed).

The residue 22 from the mercury removal furnace can be screened in a vibratory screen 23 to separate it into a pulverulent part 24 and a coarse part 25, which can be fed to magnetic separation 26 to separate iron scrap 27 from zinc, brass and graphite 28. The aqueous solution leaving the filter 18 is fed to water treatment at 30.

An example of the process carried out in accordance with the scheme of Figure 1 but without the stages shown by dashed lines in the figure will now be given.


EXAMPLE


3

- Feedstock (1): 1000 kg of alkaline, acid, nickel-cadmium, mercury and other batteries
- Wash water (4): 8000 litres
- Coarse fraction (8): 379 kg divided as follows:
220 kg of Fe (0.0175% Hg content)
36 kg of plastic (0.013% Hg)
75 kg of Zn (0.0415% Hg)
35 kg of graphite (0.0415% Hg)
10 kg of brass
3 kg of paper (0.015% Hg)
($Cl^-$ practically absent)
- Pulverulent turbid fraction (7) containing:
- water ($Cl^-$, $NH_4^+$, $K^+$ in solution)
- $MnO$, $MnO_2$, $MnO_3$ (solids)
- $ZnO$ (solid)
- carbon black - powdered graphite (solid)
- powdered zinc (solid)
- paper fibres
- Solids (19): 460 kg of dry solid divided into the following percentages (by weight):

| | |
|---|---|
| Zn | 22% |
| Mn | 37% |
| Cd | 0.0065% |
| Hg | 0.26% |
| carbon black | 8.8% |
| Cl- | 0.06% |

- Aqueous solution (29): 7940 litres (pH 8.9) containing:

| | |
|---|---|
| Hg | 100 mg/l |
| Zn | 600 mg/l |
| Cd | 6 mg/l |
| K | 15,000 mg/l |
| Cl- | 24,000 mg/l |
| $NH_4^+$ | 6,300 mg/l |

With regard to the paper, a part is pulped during the various washes, whereas a part remains attached to the screens from which it is removed by scraping with brushes which reduce it to fibre, it therefore going into the solids (19);
- Mean temperature of the mercury removal furnace: 480°C
- Residue (22) from mercury removal furnace: Hg = 0.00014% (1.4 g/t).

**Claims**

1. A process for treating spent batteries of any type, comprising essentially the following stages:
   a) disintegrating the spent batteries followed by stirring in water, then screening to obtain a pulverulent aqueous turbid fraction (underscreen fraction) and a coarse fraction (overscreen fraction);
   b) stirring the pulverulent aqueous turbid fraction at a pH exceeding 7, followed by filtering by which the solids are separated from the aqueous solution, which is fed to water treatment;
   c) removing mercury both from the coarse fraction of point a) and from the separated solids of point b) in a mercury removal furnace to obtain residues essentially free of mercury.

2. A process as claimed in claim 1, wherein the pulverulent aqueous turbid fraction is stirred at a pH of between 8 and 10.

3. A process as claimed in claim 1, wherein the mercury removal furnace operates at a temperature of less than 700°C.

4. A process as claimed in claim 3, wherein the mercury removal furnace operates at a temperature of between 500 and 630°C.

5. A process as claimed in claim 1, wherein the residues of the mercury removal furnace are subjected to screening, from which a fine fraction and a coarse fraction are obtained, this latter undergoing sorting to obtain separate iron and zinc scrap.

6. A process as claimed in claim 1, wherein the disintegrated batteries are stirred in water for a time of between 5 and 15 minutes.

7. A process as claimed in claims 1 and 2, wherein the pulverulent aqueous turbid fraction is stirred for a time of between 10 and 30 minutes.

8. A process as claimed in claim 1, wherein the coarse fraction (overscreen) of point a) is sorted to separate the plastics from the other metal and non-metal components, the plastics being then washed to recover the powdery residues, which together with the wash water are added to the pulverulent aqueous turbid fraction of point a), the metal and non-metal components being fed to the mercury removal furnace of point c).

EP 0 425 045 A1

European
Patent Office

**EUROPEAN SEARCH
REPORT**

Application Number

**EP 90 20 2821**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 284 135 (METALLGESELLSCHAFT AG) --- | | H 01 M 6/52 H 01 M 10/54 |
| A | EP-A-0 247 023 (VOEST-ALPINE AG) ----- | | |

TECHNICAL FIELDS
SEARCHED (Int. Cl.5)

H 01 M

The present search report has been drawn up for all claims

| Place of search | Date of completion of search | Examiner |
|---|---|---|
| The Hague | 28 January 91 | WITTBLAD U.A. |